# EUROPEAN PATENT APPLICATION

(11) **EP 4 647 729 A1**
(43) Date of publication of application: **12.11.2025**
(21) Application number: 25156106.4
(22) Date of filing: 05.02.2025
(51) Int. Cl.: G01F 1/66, F15D 1/00, G01F 15/00

(54) **AN ULTRASONIC FLOW METER**

(30) Priority: 06.02.2024 DE 102024103333
(71) Applicant: Landis+Gyr GmbH, 90459 Nürnberg (DE)
(72) Inventor: JÄKEL, Andreas, 90459 Nürnberg (DE); WAGNER, Christian, 90459 Nürnberg (DE)
(74) Representative: Marks & Clerk LLP

(57) **Abstract**

An ultrasonic flow meter comprises a flow pipe for a fluid whose flow rate is to be determined, a pair of ultrasound transducers for transmitting ultrasonic signals along a measuring section of the flow pipe, an ultrasound reflector provided in the flow pipe (at an upstream end of the measuring section) to guide the ultrasonic signals (the ultrasound reflector obstructs, in a first cross-sectional area of the flow pipe, the fluid flow of the fluid through the flow pipe), and a flow-conditioning element provided upstream to the ultrasound reflector and arranged to homogenise a cross-sectional velocity profile of the fluid within the measuring section by conditioning the fluid flow so that the flow velocity immediately downstream of the flow-conditioning element is higher in the first cross-sectional area than in a second cross-sectional area of the flow pipe.

## Description

### Technical Field

Embodiments described herein relate to ultrasonic flow meters and in particular to flow meters for measuring flow of a fluid, such as water meters, or thermal energy meters (e.g. heat meters or cooling meters).

### Background

It is known for fluid flow meters to use ultrasound measuring technology to measure the flow rate of the fluid. In such a device, a pair of transducers exchanges a pulse or wave packet of ultrasound signals along a "measurement section" of the measuring pipe of the flow meter. The difference of the transit-times of the ultrasound signals travelling in the direction of flow and against the direction of flow is processed to establish the flow rate of the fluid, generally known as time of flight method or transit-time difference method.

To provide accurate and reliable results, fluid flow meters need to be calibrated. This is because the correct mapping of transit-time differences to flow rates depends on the flow pattern within the measurement section of the measuring pipe. Thus, during the calibration process (which is typically performed by the manufacturer), the flow pattern inside the measurement section is recorded. This is typically achieved by determining the numerical values of a set of parameters describing the flow pattern.

A flow meter typically produces inaccurate results when the flow pattern within the measurement section changes (i.e. when the flow pattern within the measurement section differs from the corresponding flow pattern recorded during calibration). This can happen, for example, because of a change of the flow pattern of the oncoming fluid flow. To mitigate this problem, it is known to use a flow rectifier at the inlet of the flow meter to homogenise the flow profile of the oncoming fluid. Such flow rectifiers usually comprise an arrangement of guiding plates (extending parallel to the flow direction) or the like. However, conventional flow rectifiers are typically associated with a number of disadvantages such as requiring a considerable longitudinal extent to be effective, resulting in a large pressure drop and so on. Thus, there is therefore a continued need to provide improved flow meters.

### Summary

Embodiments aim to provide new and useful flow meters. Embodiments enable, for example, flow meters that produce a more homogenous flow pattern within the measurement section than conventional devices. Further, the flow pattern within the measurement section embodiments may exhibit a reduced dependency on the flow profile of the oncoming flow (i.e. the flow pattern within the measurement section may be robust against changes in the profile of the oncoming flow). Embodiments achieve this by providing a flow-conditioning element provided upstream to the measurement section. In broad terms, the flow-conditioning element is arranged to effectively pre-compensate the oncoming flow for downstream flow distortions caused by a first ultrasound reflector so that the flow pattern within the measurement section (i.e. downstream of the first ultrasound reflector) is more homogeneous than it would be without the pre-compensation. The so-homogenised flow pattern exhibits a reduced dependency on the flow profile of the oncoming flow resulting in an increased reliability and accuracy of the measured flow rates. Advantageously, the proposed flow-conditioning element requires only a short longitudinal extent to be effective and thus enables compact designs.

According to a first aspect of the invention there is provided an ultrasonic flow meter. The ultrasonic flow meter comprises a flow pipe for a fluid whose flow rate is to be determined, a pair of ultrasound transducers for transmitting ultrasonic signals along a measuring section of the flow pipe, an ultrasound reflector provided in the flow pipe, at an upstream end of the measuring section, to guide the ultrasonic signals (the ultrasound reflector obstructs, in a first cross-sectional area of the flow pipe, the fluid flow of the fluid through the flow pipe), and a flow-conditioning element provided upstream to the ultrasound reflector and arranged to homogenise a cross-sectional velocity profile of the fluid within the measuring section by conditioning the fluid flow so that the flow velocity immediately downstream of the flow-conditioning element is higher in the first cross-sectional area than in a second cross-sectional area of the flow pipe that is complementary to the first cross-sectional area.

In an embodiment, the flow-conditioning element may comprise a body. The body may comprise a plurality of flow guide plates to condition the fluid flow so that the flow velocity immediately downstream of the flow-conditioning element is higher in the first cross-sectional area than in the second cross-sectional area of the flow pipe.

In an embodiment, the flow guide plates may extend from the outer surface of the body in a radial direction of the flow pipe and are further arranged to reduce a swirling motion of the fluid. For example, the flow guide plates may extend from the outer surface of the body in a radial direction of the flow pipe to the inner wall of the flow pipe to partition the outer fluid passageway into plurality of partitioned passageways.

In an embodiment, the plurality of flow guide plates may comprise a first and a second tilted flow guide plate further arranged to guide a portion of the flow around the reflector.

In an embodiment, the first flow guide plate may be tilted with respect to the longitudinal direction of the flow pipe by a tilt angle selected from a range of 2 degrees to 15 degrees, and the second flow guide plate may be oppositely angled to the first flow guide plate.

In an embodiment, the tilt angle may be selected from a range of 4 degrees to 10 degrees. For example, the tilt angle may be 6 degrees.

In an embodiment, the body may be shaped to define i) an inner fluid passageway through the body, and ii) an outer fluid passageway between an outer surface of the body and an inner surface of the flow pipe. The outer fluid passageway may surround the inner fluid passageway to allow fluid flow through the outer fluid passageway at substantially any radial position, so that a fluid flowing through the inner fluid passageway and a fluid flowing through the outer fluid passageway exit the flow-conditioning element having different fluid pressures.

In an embodiment, the inner fluid passageway may comprise a narrow portion and a wide portion.

In an embodiment, the narrow portion may be upstream to the wide portion.

In an embodiment, the body may comprise a tapered inner surface extending, along a longitudinal direction of the flow pipe, from the narrow portion to the wide portion. The inner surface may be angled with respect to the longitudinal direction of the flow pipe by a first angle selected from a range of 2 degrees to 15 degrees.

In an embodiment, the first angle may be selected from a range of 4 degrees to 10 degrees. For example, the first angle may be 6 degrees.

In an embodiment, the body may comprise a tapered outer surface extending along a longitudinal direction of the flow pipe. The outer surface may be angled with respect to the longitudinal direction of the flow pipe by a second angle.

In an embodiment, the second angle may be selected from a range of 2 degrees to 15 degrees.

In an embodiment, the body portion may comprise a portion having a shape of a truncated hollow cone. Alternatively, the body portion may comprise a ring-shaped portion. The ring-shaped portion may have at an upstream end of the flow rectifier a larger cross-sectional thickness than at a downstream end of the flow rectifier.

In an embodiment, the ring-shaped portion may have a trapezoid cross-section.

In an embodiment, the flow-conditioning element may be spaced apart from the ultrasound reflector along the longitudinal direction of the flow pipe by a distance selected from a range of 0.5d to 5d with d being an inner diameter of the flow pipe.

In an embodiment, the distance may be selected from a range of 0.5d to 1d. Alternatively, the distance may be selected from a range of 1d to 2d.

In an embodiment, the flow-conditioning element may further comprise an outer frame coupled to the body and attachable to the inner wall of the flow pipe so as to secure the flow-conditioning element to the flow pipe.

According to a second aspect of the invention, there is provided an ultrasonic flow meter. The ultrasonic flow meter comprises a flow pipe for a fluid whose flow rate is to be determined, a pair of ultrasound transducers for transmitting ultrasonic signals along a measuring section of the flow pipe, an ultrasound reflector provided in the flow pipe (at an upstream end of the measuring section) to guide the ultrasonic signals (the ultrasound reflector obstructs, in a first cross-sectional area of the flow pipe, the fluid flow of the fluid through the flow pipe), and a flow-conditioning element provided upstream to the ultrasound reflector and shaped to define i) an inner fluid passageway through a body of the flow-conditioning element, the inner fluid passageway comprising a narrow portion at an upstream end of the flow-conditioning element and a wide portion at a downstream end of the flow-conditioning element, and ii) an outer fluid passageway between a tapered outer surface of the body of the flow-conditioning element and an inner surface of the flow pipe, the tapered outer surface extending along a longitudinal direction of the flow pipe and being angled with respect to the longitudinal direction of the flow pipe by a first angle to decrease the cross-sectional area of the outer passageways in flow direction. The outer fluid passageway surrounds the inner fluid passageway to allow fluid flow through the outer fluid passageway at substantially any radial position, so that a fluid flowing through the inner fluid passageway and a fluid flowing through the outer fluid passageway exit the flow-conditioning element having different fluid pressures.

In an embodiment, the inner fluid passageway may comprise a narrow portion and a wide portion.

In an embodiment, the narrow portion may be upstream to the wide portion.

In an embodiment, the body may comprise a tapered inner surface extending, along a longitudinal direction of the flow pipe, from the narrow portion to the wide portion. The inner surface may be angled with respect to the longitudinal direction of the flow pipe by a first angle selected from a range of 2 degrees to 15 degrees.

In an embodiment, the first angle may be selected from a range of 4 degrees to 10 degrees. For example, the first angle may be 6 degrees.

In an embodiment, the body of the flow-conditioning element may comprise a tapered outer surface extending along a longitudinal direction of the flow pipe. The outer surface may be angled with respect to the longitudinal direction of the flow pipe by a second angle.

In an embodiment, the second angle may be selected from a range of 2 degrees to 15 degrees.

In an embodiment, the body portion may comprise a portion having a shape of a truncated hollow cone. Alternatively, the body portion comprises a ring-shaped portion. The ring-shaped portion may have at an upstream end of the flow rectifier a larger cross-sectional thickness than at a downstream end of the flow rectifier.

In an embodiment, the ring-shaped portion may have a trapezoid cross-section.

In an embodiment, the flow-conditioning element may be further arranged to homogenise a cross-sectional velocity profile of the fluid within the measuring section by conditioning the fluid flow so that the flow velocity immediately downstream of the flow-conditioning element is higher in the first cross-sectional area than in a second cross-sectional area of the flow pipe.

In an embodiment, the body of the flow-conditioning element may comprise a plurality of flow guide plates to condition the fluid flow so that the flow velocity immediately downstream of the flow-conditioning element is higher in the first cross-sectional area than in the second cross-sectional area of the flow pipe.

In an embodiment, the flow guide plates may extend from the outer surface of the body in a radial direction of the flow pipe and are further arranged to reduce a swirling motion of the fluid.

In an embodiment, the flow guide plates may extend from the outer surface of the body in a radial direction of the flow pipe to the inner wall of the flow pipe to partition the outer fluid passageway into plurality of partitioned passageways dimensioned to reduce a swirling motion of the fluid.

In an embodiment, the plurality of flow guide plates may comprise a first and a second tilted flow guide plate further arranged to guide a portion of the flow around the reflector.

In an embodiment, the first flow guide plate may be tilted with respect to the longitudinal direction of the flow pipe by a tilt angle selected from a range of 2 degrees to 15 degrees, and the second flow guide plate is oppositely angled to the first flow guide plate.

In an embodiment, the tilt angle may be selected from a range of 4 degrees to 10 degrees. For example, the tilt angle may be 6 degrees.

In an embodiment, the flow-conditioning element may be spaced apart from the ultrasound reflector along the longitudinal direction of the flow pipe by a distance selected from a range of 0.5d to 5d with d being an inner diameter of the flow pipe.

In an embodiment, the distance may be selected from a range of 0.5d to 1d. Alternatively, the distance may be selected from a range of 1d to 2d.

In an embodiment, the flow-conditioning element may further comprise an outer frame coupled to the body and attachable to the inner wall of the flow pipe so as to secure the flow-conditioning element to the flow pipe.

### Brief Description of the Drawings

Preferred embodiments of the present invention will now be described, by way of example only, with reference to the accompanying Figures, in which:
Figure 1 is a cross-sectional view of a portion of a conventional flow meter;
Figures 2A to 2D are simulated flow profiles of a fluid flowing through the conventional flow meter of Figure 1;
Figure 3 is cross-sectional view of a portion of a flow meter according to an embodiment;
Figure 4A, 4B and 4C are perspective, front and back views of a flow-conditioning element according to an embodiment;
Figure 5 schematically illustrates a fluid flow through the flow-conditioning element of Figures 4A to 4C;
Figures 6A to 6D are simulated flow profiles of a fluid flowing through the flow meter of Figure 3.

In the Figures, like features are denoted with like references numerals.

### Detailed Description

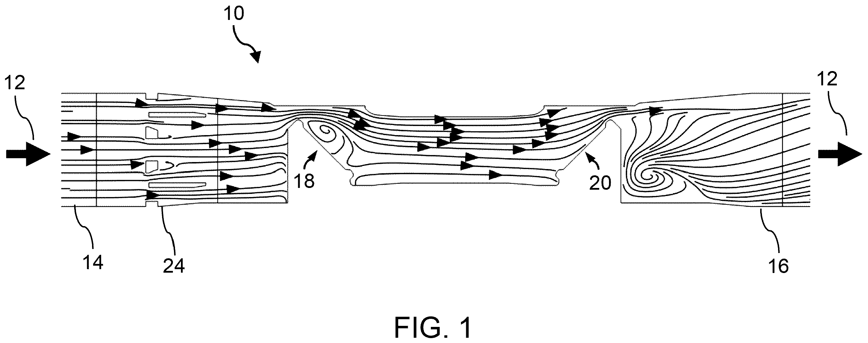

A conventional fluid flow meter 10 will now be described with reference to Figure 1. The fluid flow meter 10 uses known ultrasound measuring technology to measure the flow rate of a fluid through a flow pipe of the flow meter. The fluid is typically a liquid, e.g. water. As an example, the fluid flow meter 10 can be used as a water meter in a domestic or industrial system.

In use, a fluid flows from an inlet 14 of the flow pipe to an outlet 16 (the arrows 12 in Figure 1 indicate the flow direction). The inlet 14 and outlet 16 of the flow pipe are intended to be fitted to a pipe system through which the to-be-detected fluid flows. The flow meter 10 measures the flow rate of the fluid in the flow pipe based on a transit-time (or "time of flight") difference of oppositely propagating sound waves (e.g. ultrasonic signals). To this end, the flow meter 10 comprises a pair of (ultrasonic) transducers (not shown in Figure 1) which are capable of both emitting ultrasonic signals and detecting received ultrasonic signals. The pair of transducers is arranged so that each transducer can send ultrasound signals to and receive ultrasound signals from the other transducer. The flow meter 10 further comprises known circuitry to process the detected transit-times of the ultrasound signals (not shown in Figure 1).

The flow meter 10 implements a "U-shaped" propagation path of the ultrasonic signals. To this end, the flow meter 10 further comprises two ultrasound reflectors 18, 20 (e.g. metal mirrors) for guiding (i.e. reflecting) the ultrasonic signals. The two ultrasound reflectors 18, 20 are provided inside the flow pipe by support structures (referred to as reflector towers) which extend from a portion of the inner wall of the flow pipe. The reflector towers hold the reflectors 18, 20 so that the reflecting surfaces of the reflectors 18, 20 are angled by approximately 45° relative to the central axis of the flow pipe. Thus, the ultrasonic signals (that are exchanged between the two transducers of the flow meter 10) do not travel in a straight line from one transducer to the other transducer, but are guided by the two ultrasound reflectors 18, 20 (referred to as "upstream reflector" 18 and "downstream reflector" 20) along a U-shaped path within the flow pipe.

In use, a first (upstream) transducer emits ultrasonic signals (perpendicular to the direction of flow) towards the upstream reflector 18. The upstream reflector 18 reflects the signals so that these signals propagate substantially parallel to the streaming fluid. Further downstream, the downstream reflector 20 reflects the signals towards a second (downstream) transducer (i.e. completing the U-shaped path). Similarly, ultrasonic signals emitted by the downstream transducer propagate along the same path to the upstream transducer. The region of the flow pipe in which ultrasonic signals are propagate substantially parallel to the streaming fluid may be referred to as the "measurement section" of the flow meter 10 (more generally, the propagation path between the reflectors may be said to correspond to the "measurement section").

At the inlet end, the flow meter 10 further comprises a sieve (not visible in Figures 1)and a flow rectifier 24. The sieve is thin (i.e. of relative short longitudinal extent) and is provided immediately upstream to the flow rectifier 24 which in turn is upstream to the upstream reflector 18. The thin sieve primarily serves to catch dirt particles (e.g. to prevent contamination of the measurement section). The flow rectifier 24 is of conventional design comprising a plurality of long passageways which extend parallel to the central axis of the flow pipe (in particular, flow rectifier 24 comprises a central passageway and 12 narrow passageways circumferentially spaced around the central passageway). The purpose of the passageways is to reduce (potentially present) helical or spiral flow (i.e. swirling motion) from the oncoming flow. Disadvantageously, the long and narrow passageways of the flow rectifier 24 result in a large pressure drop which needs to be compensated by higher pressure of the oncoming flow.

The inventors have found (inter alia by performing computational simulations of the flow within flow meters) that, for the flow meter 10, the accuracy of the determined flow rate readings is affected by distortions (swirling flow, vortices, and so on) in the oncoming flow. For example, in a situation where the flow meter 10 is calibrated for an oncoming flow which exhibits no swirling motion and is installed in a system which provides an incoming flow with (fixed or temporally changing) swirling motion, the accuracy of the flow rate readings can be poor. The inventors have found that a reason for this is the distortion of the flow profile by the upstream reflector 18 which results in a complex flow profile within the measurement section that, despite the presence of the flow rectifier 24, is surprisingly sensitive to details of the oncoming flow (e.g. the direction and strength of the swirling flow of the fluid). The complex flow profile caused by the obstructing upstream reflector 18 is illustrated in Figure 1 which show several streamlines for an oncoming flow having a strong right-handed helical flow. These Figures show that fewer streamlines pass the upstream reflector 18 close to the "lower end" of the reflector tower (i.e. the end portion of the reflector tower that is extends from the inner wall of the flow pipe) compared to the "upper end" of the reflector tower. In other words, the upstream reflector 18 and the corresponding reflector tower collectively provide a higher flow resistance at a lower end of the reflector tower than at an upper end of the reflector 18. This difference in flow resistance causes distortions of the flow profile within the measurement section.

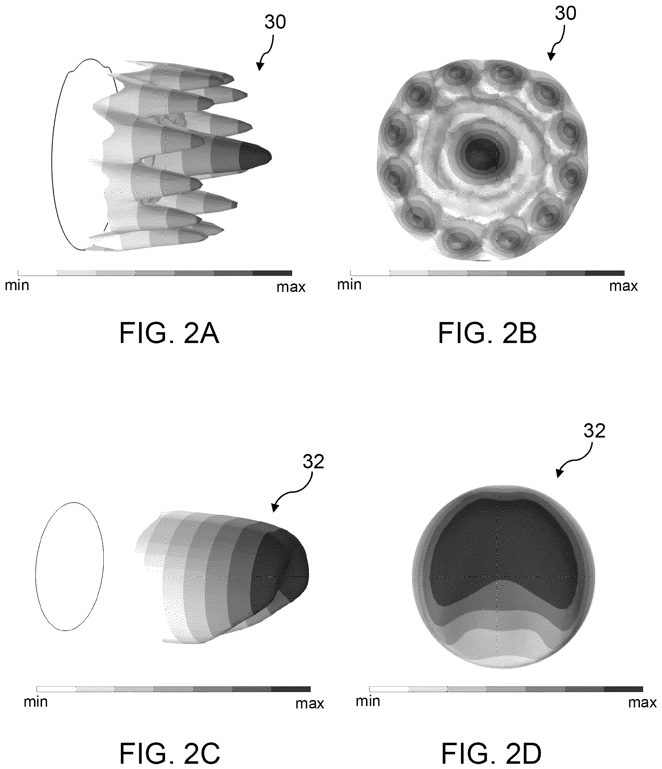

Further, Figures 2A and 2B show a simulated cross-sectional flow profile 30 at a location between the flow rectifier 24 and the upstream reflector 18 (for the same flow conditions as used to simulate the streamlines in Figure 1). It can be seen that the longitudinal passageways of the flow rectifier 24 result in corresponding "peaks" in the flow profile 30. It can further be seen that the flow profile 30 generally exhibits the same rotational symmetry as the flow rectifier 24 (i.e. a 12-fold rotational symmetry). Figures 2C and 2D show a corresponding simulated cross-sectional flow profile 32 at the midpoint of the measurement section (i.e. halfway in between the ultrasound reflectors 18, 20). The flow profile 32 exhibits a high velocity portion (at the upper end) and a low velocity portion (at the lower end). In broad terms, the low velocity portion corresponds to a "flow shadow" generated by the upstream reflector 18. Such an asymmetric velocity profile leads to complex flow propagation within the measurement section which is sensitive to even small changes in the oncoming flow.

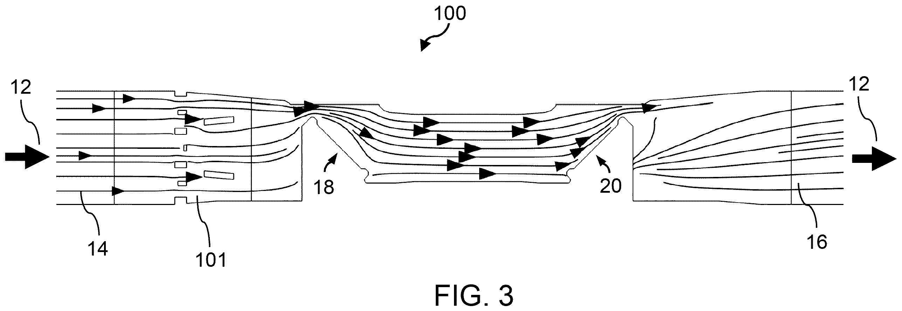

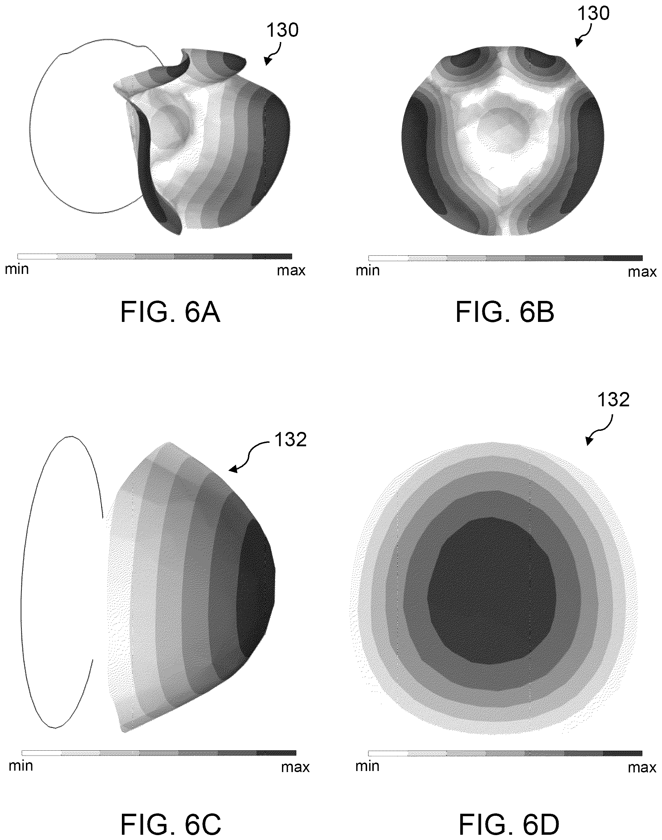

With reference to Figures 3 to 6D, a flow meter 100 will now be described that alleviates one or more of the problems associated with the conventional flow meter 10 described above. Like the flow meter 10, the flow meter 100 comprises a flow pipe (e.g. a brass pipe) for a fluid (e.g. water) whose flow rate is to be determined. Also like flow meter 10, the flow meter 100 uses known ultrasound measuring technology to measure the flow rate based on a transit-time difference of oppositely propagating sound waves (e.g. ultrasonic signals) along a "U-shaped" propagation path defined by a pair of ultrasound transducers and two ultrasound reflectors 18, 20 (e.g. metal mirrors) for guiding (i.e. reflecting) the ultrasonic signals.

Unlike the flow meter 10, the flow meter 100 comprises a flow-conditioning element 101 (instead of the flow rectifier 24) in between the sieve and the upstream reflector 18. In broad terms, the purpose of the flow-conditioning element 101 is to "pre-condition" (or "pre-compensate") the incoming fluid flow in a way that takes into account downstream flow distortions caused by the upstream ultrasound reflector 18 so that the flow pattern within the measurement section (i.e. downstream of the upstream ultrasound reflector 18) is sufficiently uniform (e.g. uniform enough to significantly reduce a dependency of the flow pattern within the measurement section on the flow pattern of the oncoming fluid). To this end, the flow-conditioning element 101 provides increased fluid resistance in a cross-sectional portion of the flow which is complementary to the cross-sectional portion that is obstructed by the upstream reflector 18 (it is to be understood that exact complementarity is typically not required, e.g. a small overlap of the cross-sectional portion in which the flow-conditioning element 101 provides the increased fluid resistance and the cross-sectional portion that is obstructed by the upstream reflector 18 may be acceptable). Typically, the total amount of the increased fluid resistance provided by the flow-conditioning element 101 substantially matches the fluid resistance provided by the upstream reflector 18 in the corresponding cross-sectional portion. In general, the flow-conditioning element 101 provides a cross-sectional flow resistance that is asymmetric (e.g. does not exhibit any rotational symmetry with respect to the longitudinal axis of the flow pipe). This is because the upstream reflector and the associated support structure typically form an obstacle for the fluid that is not rotationally symmetric around the longitudinal axis of the flow pipe. In other words, in contrast to the common approach of aiming at reducing fluid flow resistances within the flow pipe, the flow-conditioning element 101 intentionally provides additional fluid flow resistance which strength and cross-sectional distribution is selected to "complement" the flow resistance of the upstream flow reflector 18 (in strength and distribution) so that, when taken together, the flow-conditioning element 101 and the upstream flow reflector 18 provide a substantially cross-sectionally homogenous flow resistance.

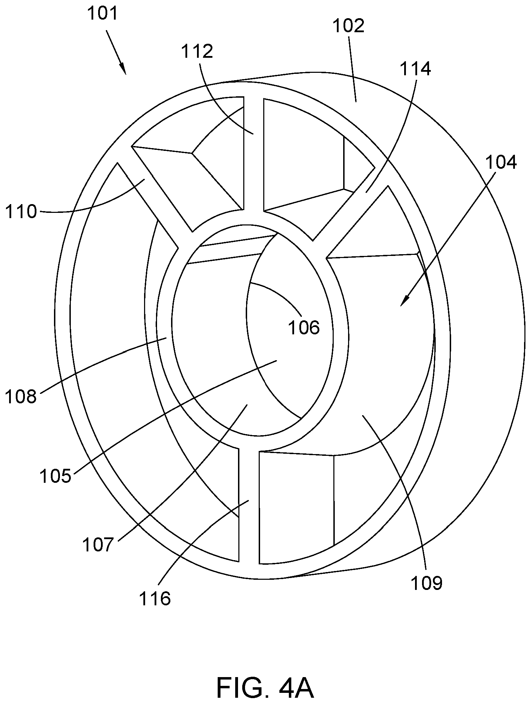

More specifically, as shown in Figures 4A to 4C, the flow-conditioning element 101 comprises a ring-shaped outer frame 102 which allows securing the flow-conditioning element 101 to the inner wall of the flow pipe (other embodiments may comprise alternative or additional features for securing the flow-conditioning element 101 to the flow pipe). The flow-conditioning element 101 further comprises a central body 104 that is coupled to the outer frame 102 via four flow guide plates 110, 112, 114, 116. The body 104 has generally the shape of a truncated, hollow cone (i.e. the body 104 comprises an inner conical surface 107 and an outer conical surface 109 where both surfaces 107 and 109 have the same opening angle). The opening angle of the cone-shaped body 104 is 6 degrees in the embodiment of Figures 4A to 4C. As described in detail below, the selection of the angle is generally a trade-off between an effectiveness in breaking up vortices and an undesirable pressure drop (e.g. for increasing opening angle both the effectiveness of breaking up vortices and the pressure drop increase). While the preferred embodiment of Figures 4A to 4C comprises an opening angle of 6 degrees, the inventors have found that, more generally, an opening angle in the range of 2 to 15 degrees is beneficial (preferably in the range 4 to 10 degrees). In other embodiments, the inner and the outer conical surface of the body may have different opening angles (in this case, each opening angle may be selected from the range of 2 to 15 degrees (preferably from the range 4 to 10 degrees)).

The cone-shaped body 104 comprises a narrow end 108 and a wide end 106. The inner surface 107 defines a central passageway 105 through the body 104. The flow-conditioning element 101 is typically installed in the flow pipe so that the narrow end 108 faces upstream and the wider end 106 faces downstream (however, as described below, other embodiments are envisaged in which the downstream end of the central passageway through the body is narrower than the upstream end). Thus, a cross-sectional area of the central passageway 105 increases in the direction of flow.

The four flow guide plates 110, 112, 114, 116 extend from the outer surface 109 to the outer frame 102. Adjacent flow guide plates define (together with the outer surface 109 of the body and the frame 102) outer fluid passageways 111. In contrast to the central passageway 105, a cross-sectional area of the outer passageways 111 decreases in the direction of flow (because of the conical shape of the body 104).

The flow guide plates 110, 112, 114, 116 are arranged to reduce a (potentially present) swirling motion of the fluid (i.e. to prevent swirl to propagate into the measurement section) and to provide increased fluid resistance in selected cross-sectional portions. As described above, the cross-sectional flow resistance provided by the flow-conditioning element 101 is arranged to compensate for the flow distortions caused by the upstream reflector 18. For example, the flow-conditioning element 101 provides higher fluid resistance in the upper portion (which comprises three flow guide plates, i.e. flow guide plates 110, 112, 114) than in the lower portion (which comprises only flow guide plates 116). This is "complementary" to the fluid resistance provided by the upstream reflector 18 and the corresponding reflector tower.

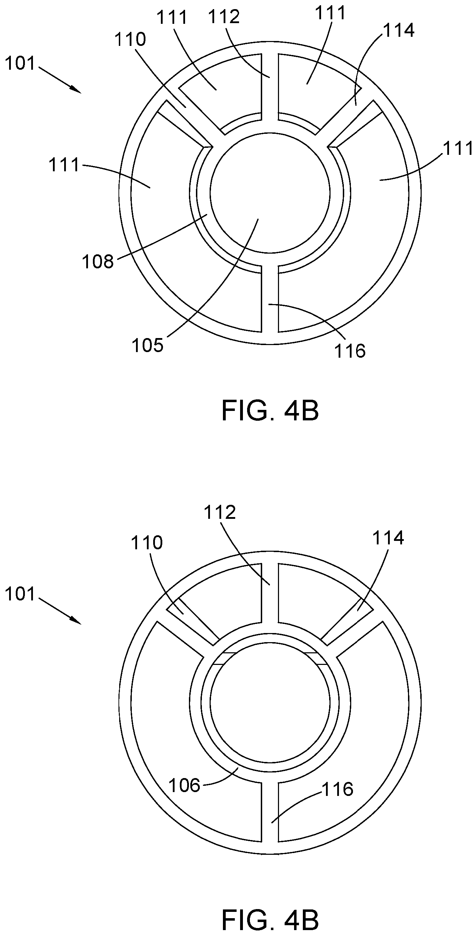

As best shown in Figures 4B and 4C, the flow guide plates 112 and 116 lie in the same plane, while the flow guide plates 110 and 114 are oppositely tilted by 45 degrees with respect to the vertical axis in the view of Figures 4B and 4C (other embodiments may use a different tilt angle). The flow guide plates 110 and 114 are further tilted with respect to the longitudinal axis of the flow pipe to further condition (at least a portion of) the fluid to flow around the upstream reflector 18. To this end, the flow guide plates 110 and 114 are tilted in opposite directions by an angle of 6 degrees (other embodiments may use a tilt angle between 2 and 15 degrees, preferably between 4 and 10 degrees).

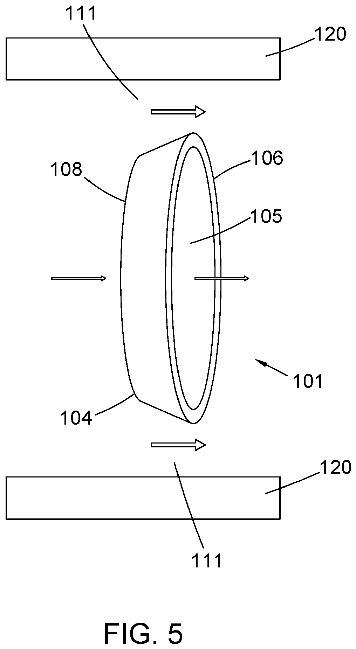

With reference to Figure 5, an effect of the conical body 104 will now be described. Figure 5 shows the flow-conditioning element 101 provided inside the flow pipe 120 (for the sake of clarity, the flow guide plates and the outer frame of the flow-conditioning element 101 have been omitted in Figure 5). A first portion of the fluid (thin arrows in Figure 5) flows through the central passageway 105 which is narrow upstream and which expands downstream. A second portion of the fluid (thick arrows in Figure 5) flows through the outer passageways 111 which are wide upstream and get restricted downstream. The first portion of the fluid exits the body 104 with a decreased velocity (and a correspondingly increased fluid pressure) because of the increase of the cross-sectional area of the central passageway in flow direction (this effect is also known as the "Venturi effect"). Similarly, the "Venturi effect" causes the second portion of the fluid to exit the outer passageways 111 with an increased velocity (and a correspondingly decreased fluid pressure) because of the decrease of the cross-sectional area of the outer passageways 111 in flow direction. As a result of the velocity difference after the flow-conditioning element 101, vortices and flow distortions in the radial direction of the flow are efficiently dissolved immediately after the flow-conditioning element 101. The above described "Venturi effect" (and thus the resulting velocity difference after the flow-conditioning element 101) increases for larger opening angles of the conical body 104. However, a larger opening angle also increase the pressure drop caused by the body 104. As noted above, the inventors found that an opening angle in the range of 2 to 15 degrees is beneficial (e.g. for typical applications like domestic or industrial water meters), i.e. such a flow-conditioning element provides a sufficient large velocity difference after the flow-conditioning element to remove vortices and radial flow distortions from the flow without causing a problematically high pressure drop.

Further, by performing computational simulations of the flow within the flow meter 100, the inventors have found that the provision of the flow-conditioning element 101 results in a substantially more uniform flow profile within measurement section. For example, Figure 3 includes simulated streamlines for an oncoming flow having a strong right-handed helical flow (i.e. the same conditions as for the simulated streamlines of Figure 1). Figure 3 shows that the streamlines flow around the upstream reflector 18 uniformly and that the streamlines within the measurement section are substantially parallel. This results in a well-defined profile within the measurement section which is robust against (changes of) flow distortions in the oncoming flow.

Further, Figures 6A to 6D show simulated cross-sectional flow profiles for the same flow conditions as used to simulate the streamlines in Figure 3. Figures 6A and 6B show a simulated cross-sectional flow profile 130 at a location between the flow-conditioning element 101 and the upstream reflector 18. The radially outer portions of the flow profile 130 (which correspond to fluid flow through the outer passageways 111) have a higher velocity than the central portion (which correspond to fluid flow through the central passageways 105) because of the Venturi effect as described above. Unlike the flow profile 30 produced by the conventional flow rectifier 24 as shown in Figures 2A and 2B, the flow profile 130 does not exhibit a rotational symmetry but exhibits a lower velocity in the upper portion of the profile 130 than in the lower portion (consistent with the desired higher flow resistance in the upper portion to pre-compensate for the fluid resistance of the upstream reflector 18).

Figures 6C and 6D shows a corresponding simulated cross-sectional flow profile 132 at the midpoint of the measurement section (i.e. halfway in between the ultrasound reflectors 18, 20) of the flow meter 100. In stark contrast to the flow profile 32 of Figures 2C and 2D, the flow profile 132 is smooth, nearly uniform and symmetric around the longitudinal axis of the flow. Notably, the flow profile 132 does not exhibit the "flow shadow" of the upstream reflector 18. The inventors found that the symmetric velocity profile 132 is significantly more robust against changes of the oncoming flow than the flow profile 32 of Figures 2C and 2D.

Various modifications will be apparent to those skilled in the art. As an example, embodiments may comprise a different number (e.g. more or fewer than four) of flow guide plates. As a further example, embodiments may comprise ultrasound reflectors which are held inside the flow pipe by suspension arms (instead of reflector towers). As a further example, embodiments may implement a "W-shaped" or a "Z-shaped" propagation path for the ultrasound signals.

In an embodiment, the body 104 may not be provided in the shape of a truncated, hollow cone but may have a different (but suitable) shape. For example, the body of the flow-conditioning element may be ring-shaped with a trapezoidal cross-sectional.

In an embodiment, the conical body of the flow-conditioning element may have upstream a wide end and downstream a narrow end. In such an embodiment the above described Venturi effect causes the fluid flow through the central passageway to exit the flow-conditioning element with higher velocity than the fluid flowing through the outer passageways. Although this velocity difference is reversed compared to the embodiment described with reference to Figures 3 to 6D, radial flow distortions and vortices are broken up in a similar manner.

Further embodiments are set out in the following clauses:
1. An ultrasonic flow meter comprising:
   a flow pipe for a fluid whose flow rate is to be determined;
   a pair of ultrasound transducers for transmitting ultrasonic signals along a measuring section of the flow pipe;
   an ultrasound reflector provided in the flow pipe, at an upstream end of the measuring section, to guide the ultrasonic signals, the ultrasound reflector obstructing, in a first cross-sectional area of the flow pipe, the fluid flow of the fluid through the flow pipe, and
   a flow-conditioning element provided upstream to the ultrasound reflector and arranged to homogenise a cross-sectional velocity profile of the fluid within the measuring section by conditioning the fluid flow so that the flow velocity immediately downstream of the flow-conditioning element is higher in the first cross-sectional area than in a second cross-sectional area of the flow pipe.
2. The ultrasonic flow meter of clause 1, wherein the flow-conditioning element comprises a body, the body comprising a plurality of flow guide plates to condition the fluid flow so that the flow velocity immediately downstream of the flow-conditioning element is higher in the first cross-sectional area than in the second cross-sectional area of the flow pipe.
3. The ultrasonic flow meter of any preceding clause, wherein the flow guide plates extend from the outer surface of the body in a radial direction of the flow pipe and are further arranged to reduce a swirling motion of the fluid.
4. The ultrasonic flow meter of clause 3, wherein the flow guide plates extend from the outer surface of the body in a radial direction of the flow pipe to the inner wall of the flow pipe to partition the outer fluid passageway into plurality of partitioned passageways.
5. The ultrasonic flow meter of clause 3 or 4, wherein the plurality of flow guide plates comprises a first and a second tilted flow guide plate further arranged to guide a portion of the flow around the reflector.
6. The ultrasonic flow meter of clause 5, wherein the first flow guide plate is tilted with respect to the longitudinal direction of the flow pipe by a tilt angle selected from a range of 2 degrees to 15 degrees, and the second flow guide plate is oppositely angled to the first flow guide plate.
7. The ultrasonic flow meter of clause 6, wherein the tilt angle is selected from a range of 4 degrees to 10 degrees.
8. The ultrasonic flow meter of clause 7, wherein the tilt angle is 6 degrees.
9. The ultrasonic flow meter of any one of preceding clause, wherein the body is shaped to define:
   i) an inner fluid passageway through the body, and
   ii) an outer fluid passageway between an outer surface of the body and an inner surface of the flow pipe, the outer fluid passageway surrounding the inner fluid passageway to allow fluid flow through the outer fluid passageway at substantially any radial position,
   so that a fluid flowing through the inner fluid passageway and a fluid flowing through the outer fluid passageway exit the flow-conditioning element having different fluid pressures.
10. The ultrasonic flow meter of clause 9, wherein the inner fluid passageway comprises a narrow portion and a wide portion.
11. The ultrasonic flow meter of clause 10, wherein the narrow portion is upstream to the wide portion.
12. The ultrasonic flow meter of clause 10 or 11, wherein the body comprises a tapered inner surface extending, along a longitudinal direction of the flow pipe, from the narrow portion to the wide portion, the inner surface being angled with respect to the longitudinal direction of the flow pipe by a first angle selected from a range of 2 degrees to 15 degrees.
13. The ultrasonic flow meter of clause 12, wherein the first angle is selected from a range of 4 degrees to 10 degrees.
14. The ultrasonic flow meter of clause 13, wherein the first angle is 6 degrees.
15. The ultrasonic flow meter of any one of clause 9 to 14, wherein the body comprises a tapered outer surface extending along a longitudinal direction of the flow pipe, the outer surface being angled with respect to the longitudinal direction of the flow pipe by a second angle.
16. The ultrasonic flow meter of clause 15, wherein the second angle is selected from a range of 2 degrees to 15 degrees.
17. The ultrasonic flow meter of any one of clause 9 to 16, wherein the body portion comprises a portion having a shape of a truncated hollow cone.
18. The ultrasonic flow meter of any one of clause 9 to 16, wherein the body portion comprises a ring-shaped portion, the ring-shaped portion having at an upstream end of the flow rectifier a larger cross-sectional thickness than at a downstream end of the flow rectifier.
19. The ultrasonic flow meter of clause 18, wherein the ring-shaped portion has a trapezoid cross-section.
20. The ultrasonic flow meter of any preceding clause, wherein the flow-conditioning element is spaced apart from the ultrasound reflector along the longitudinal direction of the flow pipe by a distance selected from a range of 0.5d to 5d with d being an inner diameter of the flow pipe.
21. The ultrasonic flow meter of clause 20, wherein the distance is selected from a range of 0.5d to 1d.
22. The ultrasonic flow meter of clause 20, wherein the distance is selected from a range of 1d to 2d.
23. The ultrasonic flow meter of any preceding clause, wherein the flow-conditioning element further comprises an outer frame coupled to the body and attachable to the inner wall of the flow pipe so as to secure the flow-conditioning element to the flow pipe.
24. An ultrasonic flow meter comprising:
   a flow pipe for a fluid whose flow rate is to be determined;
   a pair of ultrasound transducers for transmitting ultrasonic signals along a measuring section of the flow pipe;
   an ultrasound reflector provided in the flow pipe, at an upstream end of the measuring section, to guide the ultrasonic signals, the ultrasound reflector obstructing, in a first cross-sectional area of the flow pipe, the fluid flow of the fluid through the flow pipe, and
   a flow-conditioning element provided upstream to the ultrasound reflector and shaped to define:
      i) an inner fluid passageway through a body of the flow-conditioning element, and
      ii) an outer fluid passageway between a tapered outer surface of the body of the flow-conditioning element and an inner surface of the flow pipe, the tapered outer surface extending along a longitudinal direction of the flow pipe and being angled with respect to the longitudinal direction of the flow pipe by a first angle to decrease the cross-sectional area of the outer passageways in the flow direction, the outer fluid passageway surrounding the inner fluid passageway to allow fluid flow through the outer fluid passageway at substantially any radial position,
   so that a fluid flowing through the inner fluid passageway and a fluid flowing through the outer fluid passageway exit the flow-conditioning element having different fluid pressures.
25. The ultrasonic flow meter of clause 24, wherein the inner fluid passageway comprises a narrow portion and a wide portion.
26. The ultrasonic flow meter of clause 24, wherein the narrow portion is upstream to the wide portion.
27. The ultrasonic flow meter of any one of clauses 24 to 26, wherein the body comprises a tapered inner surface extending, along a longitudinal direction of the flow pipe, from the narrow portion to the wide portion, the inner surface being angled with respect to the longitudinal direction of the flow pipe by a first angle selected from a range of 2 degrees to 15 degrees.
28. The ultrasonic flow meter of clause 27, wherein the first angle is selected from a range of 4 degrees to 10 degrees.
29. The ultrasonic flow meter of clause 28, wherein the first angle is 6 degrees.
30. The ultrasonic flow meter of any one of clauses 24 to 29, wherein the body of the flow-conditioning element comprises a tapered outer surface extending along a longitudinal direction of the flow pipe, the outer surface being angled with respect to the longitudinal direction of the flow pipe by a second angle.
31. The ultrasonic flow meter of clause 30, wherein the second angle is selected from a range of 2 degrees to 15 degrees.
32. The ultrasonic flow meter of any one of clauses 24 to 31, wherein the body portion comprises a portion having a shape of a truncated hollow cone.
33. The ultrasonic flow meter of any one of clauses 24 to 31, wherein the body portion comprises a ring-shaped portion, the ring-shaped portion having at an upstream end of the flow rectifier a larger cross-sectional thickness than at a downstream end of the flow rectifier.
34. The ultrasonic flow meter of clause 33, wherein the ring-shaped portion has a trapezoid cross-section.
35. The ultrasonic flow meter of any one of clauses 24 to 34, wherein flow-conditioning element is further arranged to homogenise a cross-sectional velocity profile of the fluid within the measuring section by conditioning the fluid flow so that the flow velocity immediately downstream of the flow-conditioning element is higher in the first cross-sectional area than in a second cross-sectional area of the flow pipe.
36. The ultrasonic flow meter of clause 35, wherein the body of the flow-conditioning element comprises a plurality of flow guide plates to condition the fluid flow so that the flow velocity immediately downstream of the flow-conditioning element is higher in the first cross-sectional area than in the second cross-sectional area of the flow pipe.
37. The ultrasonic flow meter of clause 36, wherein the flow guide plates extend from the outer surface of the body in a radial direction of the flow pipe and are further arranged to reduce a swirling motion of the fluid.
38. The ultrasonic flow meter of clause 37, wherein the flow guide plates extend from the outer surface of the body in a radial direction of the flow pipe to the inner wall of the flow pipe to partition the outer fluid passageway into plurality of partitioned passageways dimensioned to reduce a swirling motion of the fluid.
39. The ultrasonic flow meter of clause 37 or 38, wherein the plurality of flow guide plates comprises a first and a second tilted flow guide plate further arranged to guide a portion of the flow around the reflector.
40. The ultrasonic flow meter of clause 39, wherein the first flow guide plate is tilted with respect to the longitudinal direction of the flow pipe by a tilt angle selected from a range of 2 degrees to 15 degrees, and the second flow guide plate is oppositely angled to the first flow guide plate.
41. The ultrasonic flow meter of clause 40, wherein the tilt angle is selected from a range of 4 degrees to 10 degrees.
42. The ultrasonic flow meter of clause 41, wherein the tilt angle is 6 degrees.
43. The ultrasonic flow meter of any one of clauses 24 to 42, wherein the flow-conditioning element is spaced apart from the ultrasound reflector along the longitudinal direction of the flow pipe by a distance selected from a range of 0.5d to 5d with d being an inner diameter of the flow pipe.
44. The ultrasonic flow meter of clause 43, wherein the distance is selected from a range of 0.5d to 1d.
45. The ultrasonic flow meter of clause 43, wherein the distance is selected from a range of 1d to 2d.
46. The ultrasonic flow meter of any one of clauses 24 to 45, wherein the flow-conditioning element further comprises an outer frame coupled to the body and attachable to the inner wall of the flow pipe so as to secure the flow-conditioning element to the flow pipe.

While certain arrangements have been described, they have been presented by way of example only, and are not intended to limit the scope of protection. The inventive concepts described herein may be implemented in a variety of other arrangements. In addition, various additions, omissions, substitutions and changes may be made to the arrangements described herein without departing from the scope of the invention as defined by the following claims.

## Claims

1. An ultrasonic flow meter comprising:
a flow pipe for a fluid whose flow rate is to be determined;
a pair of ultrasound transducers for transmitting ultrasonic signals along a measuring section of the flow pipe;
an ultrasound reflector provided in the flow pipe, at an upstream end of the measuring section, to guide the ultrasonic signals, the ultrasound reflector obstructing, in a first cross-sectional area of the flow pipe, the fluid flow of the fluid through the flow pipe, and
a flow-conditioning element provided upstream to the ultrasound reflector and arranged to homogenise a cross-sectional velocity profile of the fluid within the measuring section by conditioning the fluid flow so that the flow velocity immediately downstream of the flow-conditioning element is higher in the first cross-sectional area than in a second cross-sectional area of the flow pipe.

2. The ultrasonic flow meter of claim 1, wherein the flow-conditioning element comprises a body, the body comprising a plurality of flow guide plates to condition the fluid flow so that the flow velocity immediately downstream of the flow-conditioning element is higher in the first cross-sectional area than in the second cross-sectional area of the flow pipe.

3. The ultrasonic flow meter of any preceding claim, wherein the flow guide plates extend from the outer surface of the body in a radial direction of the flow pipe and are further arranged to reduce a swirling motion of the fluid, or
wherein the flow guide plates extend from the outer surface of the body in a radial direction of the flow pipe and are further arranged to reduce a swirling motion of the fluid and wherein the flow guide plates extend from the outer surface of the body in a radial direction of the flow pipe to the inner wall of the flow pipe to partition the outer fluid passageway into plurality of partitioned passageways.

4. The ultrasonic flow meter of claim 3, wherein the plurality of flow guide plates comprises a first and a second tilted flow guide plate further arranged to guide a portion of the flow around the reflector, or
wherein the plurality of flow guide plates comprises a first and a second tilted flow guide plate further arranged to guide a portion of the flow around the reflector and the first flow guide plate is tilted with respect to the longitudinal direction of the flow pipe by a tilt angle selected from a range of 2 degrees to 15 degrees, and the second flow guide plate is oppositely angled to the first flow guide plate.

5. The ultrasonic flow meter of any one of preceding claim, wherein the body is shaped to define:
i) an inner fluid passageway through the body, and
ii) an outer fluid passageway between an outer surface of the body and an inner surface of the flow pipe, the outer fluid passageway surrounding the inner fluid passageway to allow fluid flow through the outer fluid passageway at substantially any radial position,
so that a fluid flowing through the inner fluid passageway and a fluid flowing through the outer fluid passageway exit the flow-conditioning element having different fluid pressures.

6. The ultrasonic flow meter of claim 5, wherein the inner fluid passageway comprises a narrow portion and a wide portion, or
wherein the inner fluid passageway comprises a narrow portion and a wide portion and wherein the narrow portion is upstream to the wide portion.

7. The ultrasonic flow meter of claim 6, wherein the body comprises a tapered inner surface extending, along a longitudinal direction of the flow pipe, from the narrow portion to the wide portion, the inner surface being angled with respect to the longitudinal direction of the flow pipe by a first angle selected from a range of 2 degrees to 15 degrees, or
wherein the body comprises a tapered inner surface extending, along a longitudinal direction of the flow pipe, from the narrow portion to the wide portion, the inner surface being angled with respect to the longitudinal direction of the flow pipe by a first angle selected from a range of 4 degrees to 10 degrees, or
wherein the body comprises a tapered inner surface extending, along a longitudinal direction of the flow pipe, from the narrow portion to the wide portion, the inner surface being angled with respect to the longitudinal direction of the flow pipe by a first angle is 6 degrees.

8. The ultrasonic flow meter of any one of claim 5 to 7, wherein the body comprises a tapered outer surface extending along a longitudinal direction of the flow pipe, the outer surface being angled with respect to the longitudinal direction of the flow pipe by a second angle.

9. The ultrasonic flow meter of any one of claim 5 to 8, wherein the body portion comprises a portion having a shape of a truncated hollow cone.

10. The ultrasonic flow meter of any preceding claim, wherein the flow-conditioning element is spaced apart from the ultrasound reflector along the longitudinal direction of the flow pipe by a distance selected from a range of 0.5d to 5d with d being an inner diameter of the flow pipe, or
wherein the flow-conditioning element is spaced apart from the ultrasound reflector along the longitudinal direction of the flow pipe by a distance selected from a range of 0.5d to 5d with d being an inner diameter of the flow pipe, and wherein the distance is selected from a range of 0.5d to 1d or
wherein the flow-conditioning element is spaced apart from the ultrasound reflector along the longitudinal direction of the flow pipe by a distance selected from a range of 0.5d to 5d with d being an inner diameter of the flow pipe and wherein the distance is selected from a range of 1d to 2d.

11. The ultrasonic flow meter of any preceding claim, wherein the flow-conditioning element further comprises an outer frame coupled to the body and attachable to the inner wall of the flow pipe so as to secure the flow-conditioning element to the flow pipe.

12. An ultrasonic flow meter comprising:
a flow pipe for a fluid whose flow rate is to be determined;
a pair of ultrasound transducers for transmitting ultrasonic signals along a measuring section of the flow pipe;
an ultrasound reflector provided in the flow pipe, at an upstream end of the measuring section, to guide the ultrasonic signals, the ultrasound reflector obstructing, in a first cross-sectional area of the flow pipe, the fluid flow of the fluid through the flow pipe, and
a flow-conditioning element provided upstream to the ultrasound reflector and shaped to define:
i) an inner fluid passageway through a body of the flow-conditioning element, and
ii) an outer fluid passageway between a tapered outer surface of the body of the flow-conditioning element and an inner surface of the flow pipe, the tapered outer surface extending along a longitudinal direction of the flow pipe and being angled with respect to the longitudinal direction of the flow pipe by a first angle to decrease the cross-sectional area of the outer passageways in the flow direction, the outer fluid passageway surrounding the inner fluid passageway to allow fluid flow through the outer fluid passageway at substantially any radial position,
so that a fluid flowing through the inner fluid passageway and a fluid flowing through the outer fluid passageway exit the flow-conditioning element having different fluid pressures.

13. The ultrasonic flow meter of any one of claims 24 to 34, wherein flow-conditioning element is further arranged to homogenise a cross-sectional velocity profile of the fluid within the measuring section by conditioning the fluid flow so that the flow velocity immediately downstream of the flow-conditioning element is higher in the first cross-sectional area than in a second cross-sectional area of the flow pipe.

14. The ultrasonic flow meter of claim 13, wherein the body of the flow-conditioning element comprises a plurality of flow guide plates to condition the fluid flow so that the flow velocity immediately downstream of the flow-conditioning element is higher in the first cross-sectional area than in the second cross-sectional area of the flow pipe.

15. The ultrasonic flow meter of claim 14, wherein the flow guide plates extend from the outer surface of the body in a radial direction of the flow pipe and are further arranged to reduce a swirling motion of the fluid.
